# EUROPÄISCHE PATENTSCHRIFT

(11) **EP 3 528 188 B1**
(45) Veröffentlichungstag und Bekanntmachung des Hinweises auf die Patenterteilung: **30.08.2023**
(21) Anmeldenummer: 19157679.2
(22) Anmeldetag: 18.02.2019
(51) Int. Cl.: G06Q 10/08

(54) **VORRICHTUNG ZUR AUFNAHME MEHRERER BEHÄLTER, SYSTEM ZUR SPEICHERUNG VON SICHERHEITSDOKUMENTEN UND VERFAHREN ZUM DISPONIEREN VON SICHERHEITSDOKUMENTEN**
DEVICE FOR HOLDING A PLURALITY OF CONTAINERS, SYSTEM FOR STORING SECURITY DOCUMENTS AND METHOD FOR DISPENSING SECURITY DOCUMENTS
DISPOSITIF DE RÉCEPTION D'UNE PLURALITÉ DE RÉCIPIENT, SYSTÈME DE MÉMORISATION DE DOCUMENTS DE SÉCURITÉ ET PROCÉDÉ DE DISPOSITION DE DOCUMENTS DE SÉCURITÉ

(30) Priorität: 19.02.2018 DE 102018103647
(43) Veröffentlichungstag der Anmeldung: 21.08.2019
(73) Patentinhaber: Bundesdruckerei GmbH, 10969 Berlin (DE)
(72) Erfinder: Richter, Herbert, 13467 Berlin (DE); König, Marcus, 10409 Berlin (DE)
(74) Vertreter: Schulz Junghans Patentanwälte PartGmbB

(56) Entgegenhaltungen:
- WO-A1-89/06505
- US-A- 3 536 194
- US-A- 4 756 657
- US-A- 5 880 443
- US-A1- 2017 282 634
- VYTAUTAS JANILIONIS ET AL: "The design and investigation of two storage/retrieval mechanisms of the cylindrical automated storage and retrieval system", TRANSPORT, Bd. 28, Nr. 4, 1. Dezember 2013 (2013-12-01), Seiten 352-360, XP055581242, ISSN: 1648-4142, DOI: 10.3846/16484142.2013.864700

## Beschreibung

Die Erfindung betrifft eine Vorrichtung zur Aufnahme mehrerer Behälter, ein System zur Speicherung von Sicherheitsdokumenten sowie ein Verfahren zum Disponieren von Sicherheitsdokumenten.

Nach der Herstellung, Personalisierung und ggf. Prüfung von Sicherheitsdokumenten, beispielsweise Passbüchern, werden diese zwischengespeichert, gegebenenfalls überprüft und für den Versand vorbereitet, um an ihren Bestimmungsort transportiert zu werden.

Das Zwischenspeichern kann beispielsweise in Behältern erfolgen, in denen mehrere Sicherheitsdokumente mit demselben Bestimmungsort, derselben Dokumentenart, derselben zeitlichen Priorität und/oder ähnlichen Kriterien gemeinsam aufbewahrt werden. Derartige Behälter können neben dem Zwischenspeichern zum gemeinsamen Versand mehrerer Sicherheitsdokumente bzw. zu dessen Vorbereitung genutzt werden.

Die US 4 756 657 A offenbart einen Shuttle-Mechanismus zum Überführen von Behältern zu und von Lagerregalen, umfassend einen Rahmen, einen zur Längsbewegung auf dem Rahmen montierten Schlitten, ein Containertragebett auf dem Schlitten, und ein Paar Endlosketten, die sich in Längsrichtung des Schlittens erstrecken. Eine Antriebseinrichtung ist vorgesehen, um den Schlitten in und außer Kontakt mit dem Lagerregal auf der Ebene hin und her zu bewegen, wo die Schublade in den Schlitz oder Behälter im Regal eintritt.

US 2017 282 634 A1 lehrt ein Verpackungssystem mit einem Förderer, der konfiguriert ist, um einen oder mehrere Behälter zu transportieren. Entlang des Förderers sind zwei oder mehr Drucker angeordnet. Die Drucker sind so konfiguriert, dass sie gedrucktes Material drucken. Jeder der Drucker hat eine Schale, auf der das bedruckte Material von dem Drucker abgelegt wird. Ein Roboterarm ist in der Nähe des Förderers und der Drucker angeordnet. Der Roboterarm hat ein Werkzeug am Ende des Arms, das so konfiguriert ist, dass es das bedruckte Material aus dem Fach jedes Druckers aufnimmt. Eine Steuerung ist so konfiguriert, dass sie den Roboterarm anweist, das bedruckte Material von der Ablage in den Behälter zu legen.

Die WO 89/ 06505A1 lehrt ein Postzustellsystem mit mehreren tragbaren Ablagen, wobei jede Ablage einen Boden, eine offene Oberseite, mindestens zwei starre, gegenüberliegend angeordnete Seiten, die am Boden befestigt sind, und mindestens eine offene Seite aufweist. Ein Torelement ist zum Öffnen und Schließen der offenen Seite vorgesehen.

Bisherig bekannte Lösungen erfordern die manuelle Entnahme der Sicherheitsdokumente aus den Herstellungs- bzw. Prüfungseinrichtungen und die Zuordnung zu geeigneten Speicherplätzen zur Zwischenspeicherung. Dies bringt einen hohen manuellen Aufwand mit sich. Die aus dem Stand der Technik diesbezüglich bekannten Systeme sind durch einen großen Bauraum sowie fehlende Möglichkeiten der Automatisierung gekennzeichnet.

Es ist die Aufgabe der Erfindung, eine Vorrichtung, ein System und ein Verfahren zur Verfügung zu stellen, mit denen unter Behebung der vorgenannten Nachteile und auf besonders einfache und automatisierbare Weise die Zwischenspeicherung von Sicherheitsdokumenten möglich ist.

Die Aufgabe wird gelöst durch die Vorrichtung zur Aufnahme mehrerer Behälter gemäß Anspruch 1, das System zur Speicherung von Sicherheitsdokumenten gemäß Anspruch 9 sowie das Verfahren zum Disponieren von Sicherheitsdokumenten gemäß Anspruch 12 Ausgestaltungen der Vorrichtung sind in den Unteransprüchen 2 bis 8 angegeben und Ausgestaltungen des Systems sind in den Unteransprüchen 10-11 angegeben.

Ein erster Aspekt der Erfindung ist eine Vorrichtung zur Aufnahme mehrerer Behälter, die jeweils zur Aufnahme mehrerer Sicherheitsdokumente ausgestaltet sind, zwecks Speicherung und insbesondere Bereitstellung von Sicherheitsdokumenten. Die Vorrichtung umfasst mehrere Speicherplätze zur jeweiligen Aufnahme wenigstens eines Behälters sowie wenigstens eine Bewegungseinrichtung zur Bewegung wenigstens eines Behälters zwecks Positionierung des Behälters auf einem Speicherplatz und/oder Entnahme des Behälters von einem Speicherplatz.

Unter einem Sicherheitsdokument ist ein Dokument zu verstehen, das derart ausgebildet ist, dass die Echtheit des Dokuments verifizierbar ist. Es weist somit mindestens ein Sicherheitsmerkmal auf, anhand dessen die Echtheit des Dokuments verifiziert werden kann. Beispielsweise können buchartige Sicherheitsdokumente gemeint sein, also solche, welche wenigstens zwei Buchseiten aufweisen, die miteinander verbunden sind. Insbesondere sind die Buchseiten an einen Rücken angebunden sind, wie z. B. im Fall eines Passbuchs.

Ein Speicherplatz im Sinne der Erfindung ist räumlich definierter Bereich, in, an bzw. auf dem wenigstens ein und insbesondere genau ein Behälter aufnehmbar ist. Typischerweise weisen die Speicherplätze mechanische Begrenzungselemente auf, mittels welchen ein darauf angeordneter Behälter bei bestimmungsgemäßer Position der Vorrichtung zumindest gegen horizontales Verrutschen gesichert ist.

Typischerweise ist die Bewegungseinrichtung zur Positionierung eines Behälters auf einem Speicherplatz und/oder zur Entnahme eines Behälters von einem Speicherplatz eingerichtet. Insbesondere umfasst die Vorrichtung eine Aufnahmeeinrichtung zur Aufnahme wenigstens eines Behälters, wobei die Aufnahmeeinrichtung derart mechanisch mit der Bewegungseinrichtung gekoppelt ist, dass sie mit dieser bewegt werden kann, sodass ein auf der Aufnahmeeinrichtung angeordneter Behälter bewegbar ist. Mit anderen Worten ist die Aufnahmeeinrichtung mittels der Bewegungseinrichtung bewegbar.

Eine Ausgestaltung der Vorrichtung ist dadurch gekennzeichnet, dass die Bewegungseinrichtung dazu eingerichtet ist, wenigstens einen Behälter zu bewegen, insbesondere innerhalb der Vorrichtung, um seinen Speicherplatz zu wechseln.

Die Bestückung eines Behälters, also das Befüllen des Behälters mit wenigstens einem Sicherheitsdokument, kann auf einer Bestückungsposition des Behälters innerhalb der Vorrichtung und/oder außerhalb der Vorrichtung erfolgen. Sie erfolgt insbesondere im Inneren der Vorrichtung mittels einer externen Bestückungseinrichtung, etwa eines Bestückungsroboters.

Die Vorrichtung kann ein Gestell bzw. einen Rahmen aufweisen, an welchem die Speicherplätze sowie die Bewegungseinrichtung befestigt sind. Typischerweise sind die Speicherplätze unbeweglich am Gestell fixiert. Die Bewegungseinrichtung dient somit der Bewegung der jeweiligen Behälter in Bezug zum Gestell der Vorrichtung.

Es ist ersichtlich, dass die erfindungsgemäße Vorrichtung ein manuelles Bearbeiten der Sicherheitsdokumente überflüssig macht, da die Speicherung bzw. das Disponieren automatisierbar sind. Die erfindungsgemäße Vorrichtung ist einfach und kostengünstig sowie auf vielfältige Art und Weise nutzbar. Sie ermöglicht die Speicherung und ggf. Bereitstellung von Sicherheitsdokumenten direkt nach deren Herstellung in einer kompakten Baueinheit.

Die Vorrichtung weist wenigstens eine und insbesondere zwei Ablageeinrichtungen zur Ablage von derartigen Sicherheitsdokumenten auf, die definierten Anforderungen, insbesondere Qualitätsanforderungen, nicht genügen.

Typischerweise dienen die Ablageeinrichtungen der gezielten Speicherung zu entsorgender Sicherheitsdokumente, mit anderen Worten also zum Ausschluss von Ausschuss. Ablage meint dabei Speicherung bzw. Aufnahme der entsprechenden Sicherheitsdokumente. Es ist dabei nicht notwendig, dass die Ablageeinrichtung dazu geeignet ist, Sicherheitsdokumente direkt darauf zu positionieren bzw. abzulegen.

Im Falle der zwei Ablageeinrichtungen dienen diese insbesondere der Ablage definierten Anforderungen nicht genügender Sicherheitsdokumente zweier unterschiedlicher Qualitäten. Diese können beispielsweise wie folgt in den sogenannten identifizierbaren Ausschuss und den sogenannten nicht identifizierbaren Ausschuss eingeteilt werden.

Ein Aussortieren bzw. eine Ablage eines Sicherheitsdokuments auf bzw. in der Ablageeinrichtung kann einerseits notwendig sein, wenn anhand einer detektierten Information eines Sicherheitsdokuments bekannt ist, dass das Sicherheitsdokument nicht den Anforderungen genügt. Dies kann der Fall sein, wenn das Sicherheitsdokument nicht fehlerfrei hergestellt wurde, also nicht den Qualitätsanforderungen genügt. Eine weitere Anforderung kann unter anderem darin bestehen, dass die Bestellung eines Sicherheitsdokuments noch anhängig ist. Hier kann die detektierte Information zur Identifizierung des Sicherheitsdokuments genutzt werden. Wenn beispielsweise eine Bestellung nach Beginn des Herstellungsprozesses storniert oder geändert wurde, kann ein Aussortieren bzw. eine Entsorgung des bereits teilweise oder vollständig hergestellten Sicherheitsdokuments notwendig sein. Diese Art nicht den Anforderungen genügender Sicherheitsdokumente wird auch als identifizierbarer Ausschuss bezeichnet.

Andererseits kann die Ablage des Sicherheitsdokuments daraus resultieren, dass die Detektion einer Information bzw. die Identifikation des Sicherheitsdokuments nicht eindeutig möglich ist. Dies kann etwa durch Beschädigung des Dokumentes oder Lesefehler einer Leseeinrichtung wie eine Kamera der Fall sein. Wenn ein Sicherheitsdokument nicht identifizierbar ist, muss im Nachgang typischerweise eine manuelle Identifikation erfolgen. Diese Art nicht den Anforderungen genügender Sicherheitsdokumente wird auch als nicht identifizierbarer Ausschuss bezeichnet.

Um die Identifikation der Sicherheitsdokumente von außen bzw. im geschlossenen Zustand zu ermöglichen, beispielsweise zur Vorbereitung des Versands, können Sicherheitsdokumente mit einem Identifikationsmerkmal versehen werden. Beispielsweise wird ein Identifikationsträger wie etwa ein selbstklebendes Etikett am Sicherheitsdokument angebracht, welches als Identifikationsmerkmal einen eindeutigen Code aufweist. Anhand dessen ist eine Nachverfolgung des Sicherheitsdokuments entlang der verschiedenen Verfahrensschritte der Herstellung und Vorbereitung möglich.

Diese Ausgestaltung bringt den Vorteil mit sich, dass eine deutlich vergrößerte Funktionalität der Vorrichtung gegeben ist. Mit der Bereitstellung der Ablageeinrichtung ist die Vorrichtung zum Disponieren sowie zum Aussortieren nicht geeigneter Sicherheitsdokumente eingerichtet, wodurch sie die Bearbeitung aller wesentlichen Aufgaben im Nachgang der Herstellung der einzelnen Sicherheitsdokumente sowie in Vorbereitung ihres Versands ermöglicht.

Des Weiteren weist die Vorrichtung wenigstens eine Zuführeinrichtung auf. Dabei steht wenigstens eine Ablageeinrichtung derart in Wirkverbindung mit der Zuführeinrichtung, dass ein an bzw. in der Zuführeinrichtung positioniertes Sicherheitsdokument schwerkraftbedingt zur Ablageeinrichtung transportierbar ist.

Insbesondere steht jede Ablageeinrichtung derart in Wirkverbindung mit je einer Zuführeinrichtung, dass ein an bzw. in der jeweiligen Zuführeinrichtung positioniertes Sicherheitsdokument schwerkraftbedingt zu je einer Ablageeinrichtung transportierbar ist. Die Zuführeinrichtung ist derart angeordnet, dass der schwerkraftbedingte Transport bei bestimmungsgemäßer Position der Vorrichtung möglich ist.

Beispielsweise kann die Zuführeinrichtung als Schacht bzw. Rutsche ausgestaltet sein, an bzw. in welche Sicherheitsdokumente zwecks Fallens bzw. Rutschens zur jeweiligen Ablageeinrichtung positioniert werden können.

Mit dieser Ausgestaltung wird die Ausnutzung des zur Verfügung stehenden Raumes optimiert, da die Zuführeinrichtungen und die Ablageeinrichtungen räumlich getrennt werden können. Die Zuführeinrichtungen weisen einen geringen Platzbedarf auf und können in räumlicher Nähe zu einer Bestückungsposition angeordnet werden. Die Ablageeinrichtungen, die vorteilhafterweise große Volumina zur Aufnahme einer Vielzahl von Sicherheitsdokumenten aufweisen, können davon unabhängig an einer geeigneten Position der Vorrichtung angeordnet werden. Darüber hinaus ist die beschriebene schwerkraftbedingte Zuführung einfach und kostengünstig herstellbar sowie wenig fehleranfällig.

Weiterhin weist die Vorrichtung wenigstens einen mit der Bewegungseinrichtung bewegbaren und auf wenigstens einem Speicherplatz aufnehmbaren Behälter auf. Der Behälter weist Formelemente zur parallelen Ausrichtung mehrerer im Behälter aufgenommener Sicherheitsdokumente auf.

Typischerweise ist der Behälter auf allen Speicherplätzen aufnehmbar. Mit anderen Worten ist der Behälter zur magazinierten Aufnahme von Sicherheitsdokumenten eingerichtet. Die Formelemente definieren Aufnahmepositionen für einzelne Sicherheitsdokumente. Typischerweise ist der Behälter dazu eingerichtet, die Sicherheitsdokumente auf einer langen oder kurzen Kante senkrecht stehend aufzunehmen. Er ist insbesondere auf jedem der Speicherplätze aufnehmbar Diese Ausgestaltung weist den Vorteil auf, dass die Ein- und Ausgabe der Sicherheitsdokumente auf besonders einfache Weise realisierbar ist und aufgrund der bekannten Position der Sicherheitsdokumente ein gezielter Zugriff auf einzelne Sicherheitsdokumente möglich ist.

Die Vorrichtung umfasst auch eine Leseeinrichtung zum Auslesen eines an einem Behälter angeordneten Identifikationsmerkmals zwecks Identifizierung des Behälters und/oder zwecks Speicherung wenigstens einer Information bezüglich des ausgelesenen Identifikationsmerkmals, ggf. zusammen mit anderen Informationen, wie etwa bezüglich der Uhrzeit. Durch Verknüpfung dieser Informationen mit gespeicherten oder zu speichernden Informationen bezüglich der Identität in dem Behälter aufgenommener bzw. aufzunehmender Sicherheitsdokumente und/oder mit Informationen über Bewegungen des Behälters in der Vorrichtung kann somit eine Lokalisierung einzelner Sicherheitsdokumente ermöglicht werden.

Die Leseeinrichtung kann in bzw. an der Ein- bzw. Ausgabeeinrichtung angeordnet sein, sodass bei der Ein- bzw. Ausgabe von Behältern an ihnen angeordnete Identifikationsmerkmale auslesbar sind. Die Leseeinrichtung kann beispielsweise ein Barcodescanner zum Scannen an den Behältern angebrachter Barcodes sein.

Eine Ausgestaltung der Vorrichtung zur Aufnahme mehrerer Behälter ist dadurch gekennzeichnet, dass die Vorrichtung eine Vorschubeinrichtung zur linearen Verschiebung des Behälters zwecks Transports des Behälters von oder zu einem Speicherplatz aufweist. Insbesondere ist die Vorschubeinrichtung derart angeordnet, dass die lineare Verschiebung des Behälters bei bestimmungsgemäßer Ausrichtung der Vorrichtung horizontal ausgerichtet ist.

Insbesondere ist eine lineare Verschiebung des Behälters in Bezug zu einem Speicherplatz gemeint. Die Vorschubeinrichtung kann dazu eingerichtet sein, eine lineare Verschiebung der Aufnahmeeinrichtung zu ermöglichen, insbesondere in Bezug zum Gestell der Vorrichtung.

Auf diese Weise lässt sich die Positionierung des Behälters auf einem Speicherplatz bzw. die Entnahme eines Behälters von einem Speicherplatz auf besonders einfache Weise realisieren.

In einer weiteren Ausgestaltung umfasst die Vorrichtung entlang zweier im Wesentlichen senkrecht zueinander verlaufender Raumkoordinatenrichtungen in Reihe angeordnete Speicherplätze.

Mit anderen Worten liegen Speicherplätze bei bestimmungsgemäßer Position der Vorrichtung übereinander und nebeneinander. Dabei müssen die Speicherplätze nicht notwendiger in einer Ebene liegen, sondern können ebenso entlang einer gekrümmten Fläche im Raum angeordnet sein.

Insbesondere ist die Bewegungseinrichtung zu Positionierung des Behälters auf jedem der Speicherplätze bzw. zur Entnahme des Behälters von jedem der Speicherplätze eingerichtet. Diese Ausgestaltung ermöglicht die Bereitstellung einer Vielzahl von Speicherplätzen zum Speichern und Disponieren großer Mengen von Sicherheitsdokumenten.

In einer Ausgestaltung umfasst die Vorrichtung eine Aufstelleinrichtung zur Aufstellung bzw. Befestigung der Vorrichtung zwecks bestimmungsgemäßer Positionierung der Vorrichtung. Diese ist bei bestimmungsgemäßer Position der Vorrichtung insbesondere an ihrem unteren Bereich, typischerweise an ihrer Unterseite, angeordnet.

Eine Ausgestaltung der Vorrichtung zur Aufnahme mehrerer Behälter ist dadurch gekennzeichnet, dass die Bewegungseinrichtung zwecks Zugriffs auf die Speicherplätze eine Rotationseinrichtung zur Rotation wenigstens eines Behälters um eine Drehachse aufweist. Die Drehachse ist bei bestimmungsgemäßer Position der Vorrichtung entlang einer ersten Raumkoordinate, insbesondere vertikal, ausgerichtet.

Beispielsweise kann die Rotationseinrichtung dazu eingerichtet sein, die Aufnahmeeinrichtung derart zu bewegen, dass ein Zugriff auf mehrere nebeneinander liegende Speicherplätze möglich ist. Insbesondere erlaubt sie eine Bewegung in Bezug zu den Speicherplätzen. Auf diese Weise kann beispielsweise besonders einfach auf entlang eines Kreisbogens angeordnete Speicherplätze zugegriffen werden.

Die Rotationseinrichtung ermöglicht eine besonders einfache und wenig störungsanfällige Möglichkeit des Zugriffs auf mehrere Speicherplätze.

Die Bewegungseinrichtung kann eine zweite Rotationseinrichtung aufweisen, die in serieller mechanischer Verbindung mit der beschriebenen Rotationseinrichtung steht. Diese kann ebenfalls dazu eingerichtet sein, die Aufnahmeeinrichtung in Bezug zu den Speicherplätzen zu bewegen. Die Drehachse der zweiten Rotationseinrichtung kann parallel zu derjenigen der beschriebenen Rotationseinrichtung angeordnet sein. Auf diese Weise wird eine kinematische Kette zur Verfügung gestellt, mittels welcher ein Zugriff auf mehrere nebeneinander angeordnete Speicherplätze unabhängig von deren Ausrichtung zueinander möglich ist.

Eine weitere Ausgestaltung der Vorrichtung zur Aufnahme mehrerer Behälter ist dadurch gekennzeichnet, dass die Bewegungseinrichtung zwecks Zugriffs auf die Speicherplätze eine Verfahreinrichtung zur Realisierung einer entlang einer ersten Raumkoordinate verlaufenden, insbesondere vertikalen, linearen Bewegung aufweist.

Die Verfahreinrichtung ermöglicht den Zugriff auf Speicherplätze, welche in unterschiedlichen Höhen angeordnet sind, insbesondere übereinander angeordnete Speicherplätze. Somit kann eine einfache Zugänglichkeit zu den einzelnen Speicherplätzen bei zugleich effizienter Ausnutzung des zur Verfügung stehenden Bauraums erreicht werden. Insbesondere ist eine Bewegung wenigstens eines Behälters bzw. der Aufnahmeeinrichtung geeignet.

In einer Ausgestaltung ist die Verfahreinrichtung in allen translatorischen Freiheitsgraden fixiert ist und eine Verfahrrichtung der Verfahreinrichtung ist entlang einer ersten Raumkoordinate, insbesondere senkrecht, ausgerichtet. Dies ist insbesondere bei bestimmungsgemäßer Position der Vorrichtung der Fall. Die Vorschubeinrichtung ist dabei derart mit der Verfahreinrichtung verbunden, dass die Vorschubeinrichtung mit der Verfahreinrichtung entlang der ersten Raumkoordinate bewegbar ist.

Beispielsweise ist die Verfahreinrichtung an einem Gestell der Vorrichtung fixiert. Dies meint, dass ein erster Teil der Verfahreinrichtung fixiert ist. Ein zweiter Teil der Verfahreinrichtung ist relativ zum ersten Teil beweglich bzw. verfahrbar. Insbesondere ist die Verfahreinrichtung auch in wenigstens zwei rotatorischen Freiheitsgraden fixiert. Die Vorschubeinrichtung kann derart angeordnet sein, dass sie mittels der Verfahreinrichtung und/oder der ggf. vorhandenen Rotationseinrichtung beweglich ist. Auf diese Weise ist eine besonders einfache Ansteuerung einzelner nebeneinander bzw. übereinander angeordneter Speicherplätze möglich. Darüber hinaus weist die erfindungsgemäße Vorrichtung in dieser Ausgestaltung eine kompakte Bauweise auf, sodass eine Vielzahl von Speicherplätzen auf kleinem Raum angeordnet werden kann.

Eine weitere Ausgestaltung der Vorrichtung zur Aufnahme mehrerer Behälter ist dadurch gekennzeichnet, dass die Vorrichtung eine Ein- bzw. Ausgabeeinrichtung zur Ein- bzw. Ausgabe wenigstens eines Behälters umfasst. Die Ein- bzw. Ausgabeeinrichtung ist dabei insbesondere als wenigstens ein in einer Ebene herausziehbares bzw. herausschwenkbares Element ausgestaltet.

Ein herausziehbares Element meint dabei ebenso ein herausschiebbares Element. Insbesondere ist das Element auch entsprechend hineinschiebbar bzw. hineinschwenkbar. Das Element kann beispielsweise eine zu öffnende bzw. zu schließende Schublade oder eine herausschwenkbare bzw. herausziehbare Platte sein.

Ebenso ist es möglich, dass die Ein- bzw. Ausgabeeinrichtung aus mehreren, in einer Ebene herausziehbaren Elementen wie etwa zwei Linearführungseinrichtungen aufgebaut ist, zwischen denen wenigstens ein Behälter angeordnet und mittels diesen gehalten und bewegt werden kann.

Typischerweise umfasst die Ein- bzw. Ausgabeeinrichtung wenigstens einen Speicherplatz zur Aufnahme wenigstens eines Behälters. Insbesondere ist die Ein- bzw. Ausgabeeinrichtung derart ausgestaltet, dass leere Behälter und/oder wenigstens teilweise mit Sicherheitsdokumenten gefüllte Behälter eingegeben bzw. ausgegeben werden können. Eine Bewegung der Ein- bzw. Ausgabeeinrichtung ist insbesondere unabhängig von Bewegungen der Bewegungseinrichtung möglich.

Insbesondere ist die Ein- bzw. Ausgabeeinrichtung in die Speicherplätze der Vorrichtung integriert und in Bezug zu diesen nach außen bewegbar. Somit kann mittels der Bewegungseinrichtung auf den Speicherplatz der Ein- bzw. Ausgabeeinrichtung zugegriffen werden. Die Bewegungseinrichtung ist insbesondere dazu eingerichtet, wenigstens einen Behälter zwecks dessen Bereitstellung in bzw. auf der Ein- bzw. Ausgabeeinrichtung zu positionieren und/oder einen dort positionierten Behälter von dieser Position weg zu transportieren.

Die Ein- bzw. Ausgabeeinrichtung dient insbesondere zur Bereitstellung des Behälters zwecks dessen Entnahme aus der Vorrichtung bzw. zur Bereitstellung der Aufnahmeeinrichtung zur Aufnahme des Behälters zwecks dessen Eingabe in die Vorrichtung. Diese Ausführungsform bringt den Vorteil mit sich, dass ein einfaches und flexibles Eingeben bzw. Entnehmen von Behältern möglich ist.

In einer Ausgestaltung umfasst die Ein- bzw. Ausgabeeinrichtung zwei Speicherplätze zur jeweiligen Aufnahme eines Behälters. Mit anderen Worten ist sie zur gleichzeitigen Ein- oder Ausgabe zweier Behälter eingerichtet. Insbesondere umfasst sie zwei Aufnahmebereiche zur Aufnahme jeweils eines Behälters. Diese können Speicherplätze ausgestaltet sein. Dabei können zwei Leseeinrichtungen in bzw. an der Ein- bzw. Ausgabeeinrichtung angeordnet sein, sodass an beiden Behältern angeordnete Identifikationsmerkmale auf einfache Weise auslesbar sind.

Eine weitere Ausgestaltung der Vorrichtung zur Aufnahme mehrerer Behälter ist dadurch gekennzeichnet, dass die Vorrichtung ein Gestell aufweist, wobei die Speicherplätze sowie die Bewegungseinrichtung innerhalb eines vom Gestell umgebenen Raums angeordnet sind.

Das Gestell muss nicht notwendigerweise aus dünnen Stäben hergestellt sein, sondern kann zum Beispiel auch plattenförmige Elemente umfassen, sodass es zumindest bereichsweise ein Gehäuse ausbildet. Insbesondere sind die Speicherplätze spaltenweise und/oder zeilenweise innerhalb des Gestells angeordnet.

Insbesondere sind alle diejenigen Seiten der Speicherplätze, durch welche ein Behälter zwecks dessen Positionierung auf dem Speicherplatz bzw. zwecks dessen Entnahme von dem Speicherplatz zu bewegen ist, einem zentralen Bereich zugewandt. In dem zentralen Bereich befindet sich die Bewegungseinrichtung, sodass die mittels dieser bewegbare Aufnahmeeinrichtung dort positionierbar ist und von dort auf alle Speicherplätze zugreifen kann. Auf diese Weise wird eine besonders kompakte Anordnung der Speicherplätze ermöglicht, während gleichzeitig eine einfache und flexible Zugriffsmöglichkeit auf alle Speicherplätze gewährleistet ist.

Ein weiterer Aspekt der Erfindung ist ein System zur Speicherung von Sicherheitsdokumenten. Dieses umfasst eine erfindungsgemäße Vorrichtung zur Aufnahme mehrerer Behälter sowie eine Bestückungseinrichtung zur Bestückung von Behältern mit wenigstens einem Sicherheitsdokument zwecks Speicherung des Sicherheitsdokuments.

Die Bestückungseinrichtung ist dazu eingerichtet, einzelne Sicherheitsdokumente zu greifen und zu bewegen. Auf diese Weise können einzelne Sicherheitsdokumente von einer Position außerhalb der Vorrichtung in einem innerhalb der Vorrichtung befindlichen Behälter positioniert werden. Insbesondere ist sie zur Positionierung eines einzelnen Sicherheitsdokuments in einer definierten Ausrichtung bzw. an einer definierten Position in einem erfindungsgemäßen Behälter zur magazinierten Aufnahme mehrerer Sicherheitsdokumente eingerichtet. Die Bestückungseinrichtung kann auch als Bestückungsroboter oder als Lagerbediengerät bezeichnet werden. Insbesondere ist die Bestückungseinrichtung zur Bestückung von auf der Bestückungsposition der Vorrichtung befindlichen Behältern eingerichtet.

Das System ist dazu eingerichtet, Sicherheitsdokument in Behältern zu gruppieren, Behälter zu speichern und ggf. ein- bzw. auszugeben. Auf diese Weise ist ein besonders effizientes Disponieren von Sicherheitsdokumenten möglich.

Eine Ausgestaltung des Systems zur Speicherung von Sicherheitsdokumenten ist dadurch gekennzeichnet, dass die Bestückungseinrichtung dazu eingerichtet ist, nicht den Anforderungen, insbesondere Qualitätsanforderungen, genügende Sicherheitsdokumente zwecks deren Ablage in der Ablageeinrichtung der Vorrichtung an bzw. in der Zuführeinrichtung zu positionieren.

Somit ist die Bestückungseinrichtung dazu eingerichtet, einzelne Sicherheitsdokumente wahlweise in einen Behälter oder an bzw. in einer Zuführeinrichtung zu positionieren. Dies bringt den Vorteil mit sich, dass das System zusätzlich zum Aussortieren fehlerhafter Sicherheitsdokumente geeignet ist. Typischerweise ist die Bestückungsposition benachbart zur wenigstens einen Zuführeinrichtung angeordnet, sodass von der Bestückungseinrichtung nur kurze Wege zwischen den Positionen notwendig sind.

Eine weitere Ausgestaltung des Systems ist dadurch gekennzeichnet, dass das System eine Detektionseinrichtung zur Detektion wenigstens eines Identifikationsmerkmals bzw. Qualitätsmerkmals eines Sicherheitsdokuments zwecks Einteilung von Sicherheitsdokumenten in den Anforderungen, insbesondere den Qualitätsanforderungen, genügenden Sicherheitsdokumenten und den Anforderungen nicht genügenden Sicherheitsdokumenten aufweist.

Ein Identifikationsmerkmal ist ein Merkmal, anhand dessen ein damit gekennzeichneter Gegenstand identifizierbar ist, wie etwa ein eindeutiger Code. Ein Qualitätsmerkmal kann jegliche Anforderung an ein fehlerfrei hergestelltes Sicherheitsdokument sein, beispielsweise die Einhaltung definierter Maßtoleranzen.

Die Detektionseinrichtung kann außerhalb der Vorrichtung angeordnet sein, beispielsweise an der Bestückungseinrichtung. Diese Ausgestaltung ermöglicht es dem System zu detektieren, ob ein Sicherheitsdokument den Anforderungen entspricht und dieses mittels der Bestückungseinrichtung entsprechend in einen Behälter oder an bzw. in eine Zuführeinrichtung positionieren.

Insbesondere umfasst das System weiterhin eine Zuordnungseinrichtung zur Zuordnung des Sicherheitsdokuments zu geeigneten Klassen, etwa den Anforderungen genügenden Sicherheitsdokumenten, den Anforderungen nicht genügenden, identifizierten Sicherheitsdokumenten und den Anforderungen nicht genügenden, nicht identifizierten Sicherheitsdokumenten. Auf diese Weise ist die Ablage des Sicherheitsdokuments in der geeigneten Ablageeinrichtung mittels der Bestückungseinrichtung möglich. Die Zuordnungseinrichtung kann beispielsweise ein geeigneter Computer sein oder von einem solchen umfasst sein.

Ein dritter Aspekt der Erfindung ist ein Verfahren zum Disponieren von Sicherheitsdokumenten, bei dem eine erfindungsgemäße Vorrichtung oder ein erfindungsgemäßes System zur Speicherung von Sicherheitsdokumenten zur Verfügung gestellt wird. Es werden in wenigstens einem Behälter aufgenommene Sicherheitsdokumente mittels der Bewegungseinrichtung zwecks Positionierung des Behälters auf einem Speicherplatz und/oder Entnahme des Behälters von einem Speicherplatz bewegt. Insbesondere erfolgt die Bewegung mittels der Bewegungseinrichtung. Insbesondere wird die Bewegung der Sicherheitsdokumente durch eine Bewegung des Behälters realisiert.

Es kann ein leerer Behälter unter Nutzung der Ein- bzw. Ausgabeeinrichtung in die Vorrichtung eingegeben werden. Der Behälter kann auf einem Speicherplatz der Vorrichtung gespeichert werden. Es kann ein leerer bzw. wenigstens teilweise gefüllter Behälter unter Nutzung der Ein- bzw. Ausgabeeinrichtung aus der Vorrichtung ausgegeben werden.

Insbesondere wird wenigstens ein Sicherheitsdokument der Vorrichtung zugeführt und mittels der Bestückungseinrichtung in einem in der Vorrichtung aufgenommenen Behälter positioniert.

Das Disponieren der Sicherheitsdokumente dient beispielsweise zur Speicherung der Sicherheitsdokumente in der Vorrichtung bzw. zur Entnahme der Sicherheitsdokumente aus der Vorrichtung.

Die Erfindung wird im Folgenden anhand des in den beiliegenden Zeichnungen dargestellten Ausführungsbeispiels erläutert.

Es zeigen
- Fig. 1:: eine perspektivische Darstellung einer erfindungsgemäßen Vorrichtung, sowie
- Fig. 2:: eine Draufsicht der Vorrichtung aus Figur 1.

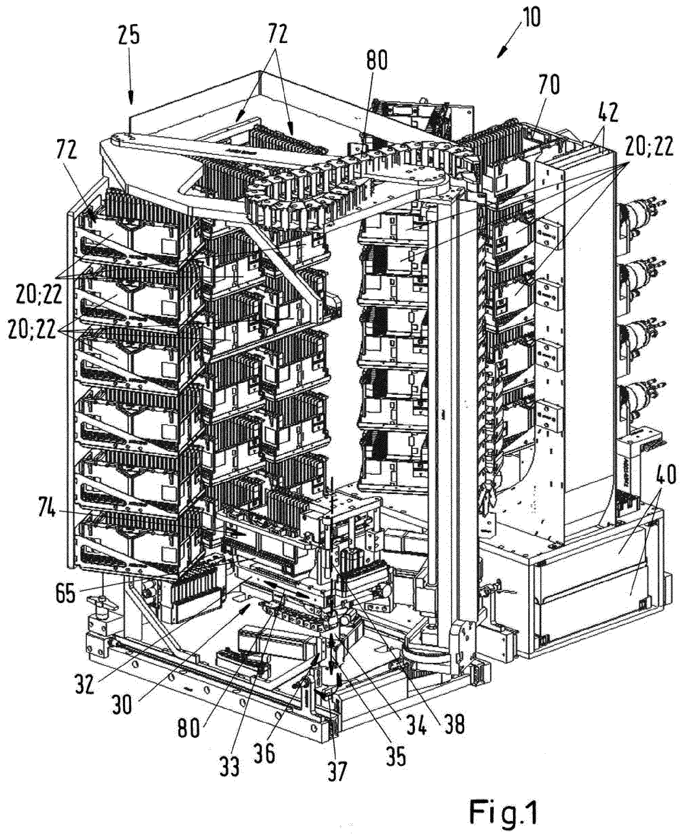

Figur 1 zeigt die erfindungsgemäße Vorrichtung 10 zur Aufnahme mehrerer Behälter 22 zwecks Speicherung von Sicherheitsdokumenten. Die Vorrichtung 10 weist eine Vielzahl an rippenartigen Speicherplätzen 20 auf, welche übereinander sowie nebeneinander angeordnet sind. Es sind fünf auf gleicher Höhe der Vorrichtung nebeneinander angeordnete Stapel mit jeweils fünf bzw. sechs in gleicher Ausrichtung übereinander angeordneten Speicherplätzen 20 dargestellt. Die drei auf der linken Seite dargestellten Stapel sind als eine zusammenhängende Speichereinheit 25 realisiert. Sämtliche Speicherplätze 20 sind im Inneren des Gestells der Vorrichtung 10 angeordnet und an dem Gestell fixiert. Dieses umfasst Stäbe sowie plattenförmige Elemente.

Auf jedem der Speicherplätze ist ein Behälter 22 zur Aufnahme mehrerer Sicherheitsdokumente angeordnet. Jeder der Behälter 22 weist eine Vielzahl an Formelementen auf, mittels welcher jeweils eine Vielzahl an Sicherheitsdokumenten parallel zueinander ausgerichtet im Inneren des Behälters positionierbar ist.

Die Seite jedes Speicherplatzes 20, durch welche ein Behälter 22 zwecks dessen Positionierung auf dem Speicherplatz 20 bzw. zwecks dessen Entnahme von dem Speicherplatz 20 zu bewegen ist, ist einem zentralen inneren Bereich zugewandt, in welchem die Bewegungseinrichtung 30 angeordnet ist.

Die Bewegungseinrichtung 30 umfasst eine Rotationseinrichtung 36 zur Rotation um eine Drehachse 38 entlang einer Rotationsrichtung 37. Letztere ist bei der gezeigten bestimmungsgemäßen Ausrichtung der Vorrichtung 10 vertikal ausgerichtet. Die Rotationseinrichtung 36 dient der Bewegung eines in der Bewegungsposition 74 befindlichen Behälters 22. Zu diesem Zweck umfasst die Vorrichtung 10 eine mittels der Bewegungseinrichtung 30 bewegbare Aufnahmeeinrichtung 65 zur Aufnahme eines Behälters 22. Die Rotationseinrichtung 36 ist zur Rotation der Aufnahmeeinrichtung 65 eingerichtet. Die Rotationseinrichtung 36 weist einen fixen Bereich und einen beweglichen Bereich auf, wobei der fixe Bereich an einem Gestell der Vorrichtung 10 in allen translatorischen und rotatorischen Freiheitsgraden fixiert ist und der bewegliche Bereich gegenüber diesem einen rotatorischen Freiheitsgrad aufweist.

Die Bewegungseinrichtung 30 umfasst weiterhin eine Verfahreinrichtung 34 zur Realisierung einer vertikalen linearen Bewegung der Aufnahmeeinrichtung 65 entlang der vertikal ausgerichteten Verfahrrichtung 35. Die Verfahreinrichtung 34 ist derart mechanisch mit der Rotationseinrichtung 36 gekoppelt, dass sie mittels dieser drehbar ist. Sie ist in allen translatorischen Freiheitsgraden am Gestell der Vorrichtung 10 fixiert. Kabelführungen 80 dienen dem Schutz von Leitungen und Kabeln in den Bewegungsbereichen.

Die Vorrichtung 10 weist weiterhin eine Vorschubeinrichtung 32 zur linearen Verschiebung des Behälters 22 bzw. der Aufnahmeeinrichtung 65 entlang der Vorschubrichtung 33 zwecks Transports des Behälters 22 von oder zu einem Speicherplatz 20 auf. Die Vorschubrichtung 33 ist horizontal ausgerichtet. Die Vorschubeinrichtung 32 ist derart mechanisch mit der Verfahreinrichtung 34 gekoppelt, dass sie mittels dieser verfahrbar ist.

Ein Großteil der Speicherplätze 20 der Vorrichtung 10 ist in der Speicherposition 72 angeordnet, also in einer Position, welche in erster Linie zur Speicherung von Behältern dient. Der oben rechts dargestellte Speicherplatz 20 ist in der Bestückungsposition 70 angeordnet, in welcher er mit einer nicht dargestellten Bestückungseinrichtung von außerhalb der Vorrichtung mit Sicherheitsdokumenten bestückt werden kann.

Benachbart zur Bestückungsposition 70 sind zwei parallel zueinander angeordnete Zuführeinrichtungen 42 dargestellt. Jede Zuführeinrichtung 42 ist in ihrem oberen Bereich als geöffneter Schacht ausgestaltet, wobei einzelne Sicherheitsdokumente mittels der Bestückungseinrichtung in die jeweilige Öffnung des Schachtes eingebracht werden können. Die Zuführeinrichtungen 42 stehen in Wirkverbindung mit jeweils einer Ablageeinrichtung 40 und sind derart ausgestaltet, dass ein daran bzw. darin positioniertes Sicherheitsdokument schwerkraftbedingt zur jeweiligen Ablageeinrichtung 40 transportiert wird. Im oberen Bereich fallen die Sicherheitsdokumente durch den jeweiligen Schacht und im unteren Bereich rutschen sie entlang der Wandung des dort gekrümmten Schachtes , der auch als Rutsche bezeichnet wird, bis hin zur jeweiligen Ablageeinrichtung 40. Die Ablageeinrichtungen 40 dienen der Ablage von Sicherheitsdokumenten, die definierten Anforderungen, wie beispielsweise Qualitätsanforderungen, nicht genügen.

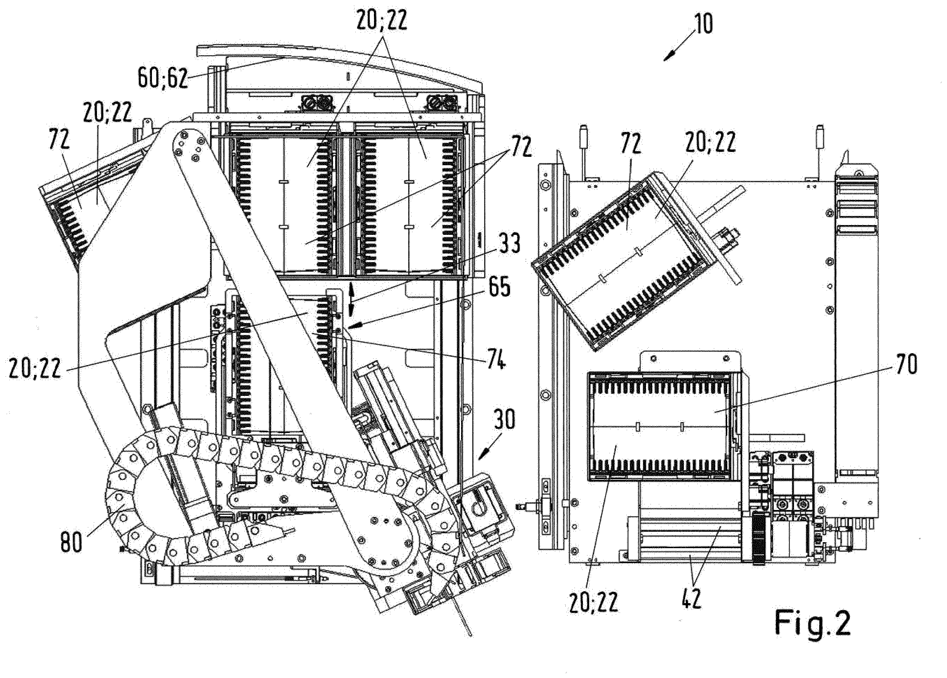

Figur 2 zeigt die Draufsicht auf die beschriebene Vorrichtung 10 zur Aufnahme mehrerer Behälter 22. Zusätzlich zum bereits Beschriebenen ist hier die Ein- bzw. Ausgabeeinrichtung 60 zur Ein- bzw. Ausgabe von Behältern 22 dargestellt. Diese ist als herausziehbares Element 62, nämlich als Schublade, ausgeführt. Sie erstreckt sich über die Breite zweier nebeneinander befindliche Speicherplätze 20 und ist linear entlang der Längsachse der auf den Speicherplätzen 20 angeordneten Behälter 22 verschiebbar. Nach dem Öffnen der Ein- bzw. Ausgabeeinrichtung 60 können darin bis zu zwei Behälter positioniert werden, welche nach dem Schließen der Ein- bzw. Ausgabeeinrichtung 60 mittels der Bewegungseinrichtung 30 im Inneren der Vorrichtung 10 von ihren jeweiligen Positionen fortbewegt werden können.

Zusätzlich umfasst die Bewegungseinrichtung 30 eine nicht dargestellte zweite Rotationseinrichtung, welche in etwa in der Mitte des links dargestellten diagonal verlaufenden länglichen Arms angeordnet ist. Dieser ist zwischen der Vorschubeinrichtung 32 und der ersten Rotationseinrichtung 36 angeordnet und mit diesen Einrichtungen mechanisch verbunden. Sie ermöglicht den Zugriff der Bewegungseinrichtung 30 bzw. der daran angeordneten Aufnahmeeinrichtung 65 auf alle in der Speicherposition 72 positionierten Behälter 22.

**Bezugszeichenliste**

| | |
|---|---|
| 10 | Vorrichtung |
| 20 | Speicherplatz |
| 22 | Behälter |
| 25 | Speichereinheit |
| 30 | Bewegungseinrichtung |
| 32 | Vorschubeinrichtung |
| 33 | Vorschubrichtung |
| 34 | Verfahreinrichtung |
| 35 | Verfahrrichtung |
| 36 | Rotationseinrichtung |
| 37 | Rotationsrichtung |
| 38 | Drehachse |
| 40 | Ablageeinrichtung |
| 42 | Zuführeinrichtung |
| 60 | Ein- bzw. Ausgabeeinrichtung |
| 62 | Element |
| 65 | Aufnahmeeinrichtung |
| 70 | Bestückungsposition |
| 72 | Speicherposition |
| 74 | Bewegungsposition |
| 80 | Kabelführung |

## Patentansprüche

1. Vorrichtung (10) zur Aufnahme mehrerer Behälter (22), die jeweils zur Aufnahme mehrerer Sicherheitsdokumente ausgestaltet sind, zwecks Speicherung von Sicherheitsdokumenten, umfassend mehrere Speicherplätze (20) zur jeweiligen Aufnahme wenigstens eines Behälters (22) sowie wenigstens eine Bewegungseinrichtung (30) zur Bewegung wenigstens eines Behälters (22) zwecks Positionierung des Behälters (22) auf einem Speicherplatz (20) und/oder Entnahme des Behälters (22) von einem Speicherplatz (20), wobei die Vorrichtung (10) wenigstens eine und insbesondere zwei Ablageeinrichtungen (40) zur Ablage von derartigen Sicherheitsdokumenten aufweist, die definierten Anforderungen, insbesondere Qualitätsanforderungen, nicht genügen, und wobei
die Vorrichtung wenigstens eine Zuführeinrichtung (42) aufweist, und wobei wenigstens eine Ablageeinrichtung (40) derart in Wirkverbindung mit der Zuführeinrichtung (42) steht, dass ein an bzw. in der Zuführeinrichtung (42) positioniertes Sicherheitsdokument schwerkraftbedingt zur Ablageeinrichtung (40) transportierbar ist, **dadurch gekennzeichnet, dass** die Vorrichtung (10) wenigstens einen mit der Bewegungseinrichtung (30) bewegbaren und auf wenigstens einem Speicherplatz (20) aufnehmbaren Behälter (22) aufweist, wobei der Behälter (22) Formelemente zur parallelen Ausrichtung mehrerer im Behälter (22) aufgenommener Sicherheitsdokumente aufweist, und dass die Vorrichtung eine Leseeinrichtung zum Auslesen eines an einem Behälter angeordneten Identifikationsmerkmals zwecks Identifizierung des Behälters und/oder zwecks Speicherung wenigstens einer Information bezüglich des ausgelesenen Identifikationsmerkmals umfasst.

2. Vorrichtung (10) zur Aufnahme mehrerer Behälter (22) nach Anspruch 1, **dadurch gekennzeichnet, dass** die Vorrichtung (10) eine Vorschubeinrichtung (32) zur linearen Verschiebung des Behälters (22) zwecks Transports des Behälters (22) von oder zu einem Speicherplatz (20) aufweist, wobei die Vorschubeinrichtung (32) insbesondere derart angeordnet ist, dass die lineare Verschiebung des Behälters (22) bei bestimmungsgemäßer Ausrichtung der Vorrichtung (10) horizontal ausgerichtet ist.

3. Vorrichtung (10) zur Aufnahme mehrerer Behälter (22) nach einem der vorhergehenden Ansprüche, **dadurch gekennzeichnet, dass** die Vorrichtung (10) entlang zweier im Wesentlichen senkrecht zueinander verlaufender Raumkoordinatenrichtungen in Reihe angeordnete Speicherplätze (20) umfasst.

4. Vorrichtung (10) zur Aufnahme mehrerer Behälter (22) nach einem der vorhergehenden Ansprüche, **dadurch gekennzeichnet, dass** die Bewegungseinrichtung (30) zwecks Zugriffs auf die Speicherplätze (20) eine Rotationseinrichtung (36) zur Rotation wenigstens eines Behälters (22) um eine Drehachse (38) aufweist, wobei die Drehachse (38) entlang einer ersten Raumkoordinate, insbesondere vertikal, ausgerichtet ist.

5. Vorrichtung (10) zur Aufnahme mehrerer Behälter (22) nach einem der vorhergehenden Ansprüche, **dadurch gekennzeichnet, dass** die Bewegungseinrichtung (30) zwecks Zugriffs auf die Speicherplätze (20) eine Verfahreinrichtung (34) zur Realisierung einer entlang einer ersten Raumkoordinate verlaufenden, insbesondere vertikalen, linearen Bewegung aufweist.

6. Vorrichtung (10) zur Aufnahme mehrerer Behälter (22) nach Anspruch 5, **dadurch gekennzeichnet, dass** die Verfahreinrichtung (34) in allen translatorischen Freiheitsgraden fixiert ist und eine Verfahrrichtung (35) der Verfahreinrichtung (34) entlang einer ersten Raumkoordinate, insbesondere senkrecht, ausgerichtet ist, wobei die Vorschubeinrichtung (32) derart mit der Verfahreinrichtung (34) verbunden ist, dass die Vorschubeinrichtung (32) mit der Verfahreinrichtung (34) entlang der ersten Raumkoordinate bewegbar ist.

7. Vorrichtung (10) zur Aufnahme mehrerer Behälter (22) nach einem der vorhergehenden Ansprüche, **dadurch gekennzeichnet, dass** die Vorrichtung (10) eine Ein- bzw. Ausgabeeinrichtung (60) zur Ein- bzw. Ausgabe wenigstens eines Behälters (22) umfasst, wobei die Ein- bzw. Ausgabeeinrichtung (60) insbesondere als wenigstens ein in einer Ebene herausziehbares bzw. herausschwenkbares Element (62) ausgestaltet ist.

8. Vorrichtung (10) zur Aufnahme mehrerer Behälter (22) nach einem der vorhergehenden Ansprüche, **dadurch gekennzeichnet, dass** die Vorrichtung (10) ein Gestell aufweist, wobei die Speicherplätze (20) sowie die Bewegungseinrichtung (30) innerhalb eines vom Gestell umgebenen Raums angeordnet sind.

9. System zur Speicherung von Sicherheitsdokumenten, umfassend eine Vorrichtung (10) zur Aufnahme mehrerer Behälter (22) gemäß einem der Ansprüche 1-8 sowie eine Bestückungseinrichtung zur Bestückung von Behältern (22) mit wenigstens einem Sicherheitsdokument zwecks Speicherung des Sicherheitsdokuments.

10. System zur Speicherung von Sicherheitsdokumenten nach Anspruch 9, **dadurch gekennzeichnet, dass** die Bestückungseinrichtung dazu eingerichtet ist, nicht den Anforderungen genügende Sicherheitsdokumente zwecks deren Ablage in der Ablageeinrichtung (40) an bzw. in der Zuführeinrichtung (42) zu positionieren.

11. System zur Speicherung von Sicherheitsdokumenten nach einem der Ansprüche 9 und 10, **dadurch gekennzeichnet, dass** das System eine Detektionseinrichtung zur Detektion wenigstens eines Identifikationsmerkmals bzw. Qualitätsmerkmals eines Sicherheitsdokuments zwecks Einteilung von Sicherheitsdokumenten in den Anforderungen genügende Sicherheitsdokumente und den Anforderungen nicht genügende Sicherheitsdokumente aufweist.

12. Verfahren zum Disponieren von Sicherheitsdokumenten, bei dem eine Vorrichtung (10) nach einem der Ansprüche 1-8 oder ein System zur Speicherung von Sicherheitsdokumenten gemäß einem der Ansprüche 9-11 zur Verfügung gestellt wird und in wenigstens einem Behälter (22) aufgenommene Sicherheitsdokumente mittels der Bewegungseinrichtung (30) zwecks Positionierung des Behälters (22) auf einem Speicherplatz (20) und/oder Entnahme des Behälters (22) von einem Speicherplatz (20) bewegt werden.

## Claims

1. Device (10) for receiving a plurality of containers (22), which are respectively formed for receiving a plurality of security documents, for the purpose of storing security documents, comprising a plurality of storage sites (20) for respectively receiving at least one container (22), as well as at least one movement apparatus (30) for moving at least one container (22) for the purpose of positioning the container (22) on a storage site (20) and/or withdrawal of the container (22) from a storage site (20), wherein the device (10) comprises at least one and in particular two depositing apparatuses (40) for depositing such security documents which do not meet defined requirements, in particular quality requirements, and wherein
the device comprises at least one supply apparatus (42), and wherein at least one depositing apparatus (40) is operatively connected to the supply apparatus (42) in such a way that a security document positioned on or in the supply apparatus (42) is transportable by gravity to the depositing apparatus (40), **characterized in that** the device (10) comprises at least one container (22) movable with the movement apparatus (30) and receivable on at least one storage site (20), wherein the container (22) comprises shape elements for parallel alignment of a plurality of security documents received in the container (22), and that the device comprises a reading apparatus for reading an identification feature arranged on a container for the purpose of identifying the container and/or for the purpose of storing at least one information relating to the read identification feature.

2. Device (10) for receiving a plurality of containers (22) according to claim 1, **characterized in that** the device (10) comprises a feed apparatus (32) for linearly displacing the container (22) for the purpose of transporting the container (22) from or to a storage site (20), wherein the feed apparatus (32) is particularly arranged such that the linear displacement of the container (22) is horizontally oriented when the device (10) is oriented as intended.

3. Device (10) for receiving a plurality of containers (22) according to any one of the preceding claims, **characterized in that** the device (10) comprises storage sites (20) arranged in series along two spatial coordinate directions essentially perpendicular to each other.

4. Device (10) for receiving a plurality of containers (22) according to any one of the preceding claims, **characterized in that** the movement apparatus (30) comprises rotation apparatus (36) for rotating at least one container (22) about a rotation axis (38) for the purpose of accessing the storage sites (20), wherein the rotation axis (38) is oriented along a first spatial coordinate, in particular vertically.

5. Device (10) for accommodating a plurality of containers (22) according to any one of the preceding claims, **characterized in that**, for the purpose of accessing the storage sites (20), the movement apparatus (30) comprises a traversing apparatus (34) for realizing a linear movement, in particular vertical, running along a first spatial coordinate.

6. Device (10) for receiving a plurality of containers (22) according to claim 5, **characterized in that** the traversing apparatus (34) is fixed in all translational degrees of freedom and a traversing direction (35) of the traversing apparatus (34) is oriented along a first spatial coordinate, in particular vertically, wherein the feed apparatus (32) is connected to the traversing apparatus (34) in such a way that the feed apparatus (32) is movable with the traversing apparatus (34) along the first spatial coordinate.

7. Device (10) for receiving a plurality of containers (22) according to any one of the preceding claims, **characterized in that** the device (10) comprises an input or output apparatus (60) for inputting or outputting at least one container (22), wherein the input or output apparatus (60) is formed in particular as at least one element (62) pullable or pivotable out in a plane.

8. Device (10) for holding a plurality of containers (22) according to any one of the preceding claims, **characterized in that** the device (10) comprises a rack, wherein the storage sites (20) as well as the movement apparatus (30) are arranged within a space surrounded by the rack.

9. System for storing security documents, comprising a device (10) for receiving a plurality of containers (22) according to any one of claims 1-8, as well as a populating apparatus for populating containers (22) with at least one security document for the purpose of storing the security document.

10. System for storing security documents according to claim 9, **characterized in that** the populating apparatus is configured to position security documents not meeting the requirements for the purpose of depositing them in the depositing apparatus (40) at or in the supply apparatus (42).

11. System for storing security documents according to any one of claims 9 and 10, **characterized in that** the system comprises a detection apparatus for detecting at least one identification feature or quality feature of a security document for the purpose of classifying security documents into security documents satisfying the requirements and security documents not satisfying the requirements.

12. Method for disposing security documents, wherein a device (10) according to any one of claims 1-8 or a system for storing security documents according to any one of claims 9-11 is provided and security documents stored in at least one container (22) are moved by means of the moving device (30) for the purpose of positioning the container (22) on a storage site (20) and/or withdrawal of the container (22) from a storage site (20).

## Revendications

1. Dispositif (10) de réception de plusieurs contenants (22) qui sont chacun configurés pour la réception de plusieurs documents de sécurité, dans le but de stocker des documents de sécurité, comprenant plusieurs emplacements de stockage (20) pour la réception respective d'au moins un contenant (22) ainsi qu'au moins une installation de mouvement (30) pour le déplacement d'au moins un contenant (22) dans le but de positionner le contenant (22) sur un emplacement de stockage (20) et/ou de prélever le contenant (22) d'un emplacement de stockage (20), dans lequel le dispositif (10) présente au moins une et notamment deux installations de dépôt (40) pour le dépôt de tels documents de sécurité qui ne satisfont pas des exigences définies, notamment exigences de qualité, et dans lequel
le dispositif présente au moins une installation d'acheminement (42), et dans lequel au moins une installation de dépôt (40) se trouve en connexion active avec l'installation d'acheminement (42) de telle sorte qu'un document de sécurité positionné sur ou dans l'installation d'acheminement (42) peut être transporté de manière conditionnée par la pesanteur vers l'installation de dépôt (40), **caractérisé en ce que** le dispositif (10) présente au moins un contenant (22) pouvant être déplacé avec l'installation de mouvement (30) et pouvant être reçu sur au moins un emplacement de stockage (20), dans lequel le contenant (22) présente des éléments de moule pour l'alignement parallèle de plusieurs documents de sécurité reçus dans le contenant (22), et que le dispositif comprend une installation de lecture pour la lecture d'une caractéristique d'identification disposée sur un contenant dans le but d'identifier le contenant et/ou dans le but de stocker au moins une information concernant la caractéristique d'identification lue.

2. Dispositif (10) de réception de plusieurs contenants (22) selon la revendication 1, **caractérisé en ce que** le dispositif (10) présente une installation d'avance (32) pour l'avance linéaire du contenant (22) dans le but de transporter le contenant (22) de ou vers un emplacement de stockage (20), dans lequel l'installation d'avance (32) est notamment disposée de telle sorte que l'avance linéaire du contenant (22) est alignée horizontalement lors d'un alignement conforme du dispositif (10).

3. Dispositif (10) de réception de plusieurs contenants (22) selon une des revendications précédentes, **caractérisé en ce que** le dispositif (10) comprend des emplacements de stockage (20) disposés en rangée le long de deux directions de coordonnées spatiales s'étendant essentiellement perpendiculairement l'une à l'autre.

4. Dispositif (10) de réception de plusieurs contenants (22) selon une des revendications précédentes, **caractérisé en ce que** l'installation de mouvement (30) présente dans le but d'accéder aux emplacements de stockage (20) une installation de rotation (36) pour la rotation d'au moins un contenant (22) autour d'un axe de rotation (38), dans lequel l'axe de rotation (38) est aligné le long d'une première coordonnée spatiale, notamment verticalement.

5. Dispositif (10) de réception de plusieurs contenants (22) selon une des revendications précédentes, **caractérisé en ce que** l'installation de mouvement (30) présente dans le but d'accéder aux emplacements de stockage (20) une installation de déplacement (34) pour la réalisation d'un mouvement linéaire, notamment vertical, s'étendant le long d'une première coordonnée spatiale.

6. Dispositif (10) de réception de plusieurs contenants (22) selon la revendication 5, **caractérisé en ce que** l'installation de déplacement (34) est fixée dans tous les degrés de liberté translatoires et une direction de déplacement (35) de l'installation de déplacement (34) est alignée le long d'une première coordonnée spatiale, notamment verticalement, dans lequel l'installation d'avance (32) est connectée à l'installation de déplacement (34) de telle sorte que l'installation d'avance (32) peut être déplacée avec l'installation de déplacement (34) le long de la première coordonnée spatiale.

7. Dispositif (10) de réception de plusieurs contenants (22) selon une des revendications précédentes, **caractérisé en ce que** le dispositif (10) comprend une installation d'entrée ou de sortie (60) pour l'entrée ou la sortie d'au moins un contenant (22), dans lequel l'installation d'entrée ou de sortie (60) est notamment configurée en tant qu'au moins un élément (62) pouvant être extrait ou extrait par pivotement dans un plan.

8. Dispositif (10) de réception de plusieurs contenants (22) selon une des revendications précédentes, **caractérisé en ce que** le dispositif (10) présente un bâti, dans lequel les emplacements de stockage (20) ainsi que l'installation de mouvement (30) sont disposés au sein d'un espace entouré par le bâti.

9. Système de stockage de documents de sécurité, comprenant un dispositif (10) de réception de plusieurs contenants (22) selon une des revendications 1 à 8 ainsi qu'une installation de chargement pour le chargement de contenants (22) avec au moins un document de sécurité dans le but de stocker le document de sécurité.

10. Système de stockage de documents de sécurité selon la revendication 9, **caractérisé en ce que** l'installation de chargement est configurée pour positionner des documents de sécurité ne satisfaisant pas les exigences sur ou dans l'installation d'acheminement (42) dans le but de les déposer dans l'installation de dépôt (40).

11. Système de stockage de documents de sécurité selon une des revendications 9 et 10, **caractérisé en ce que** le système présente une installation de détection pour la détection d'au moins une caractéristique d'identification ou caractéristique de qualité d'un document de sécurité dans le but de classifier des documents de sécurité en documents de sécurité satisfaisant les exigences et documents de sécurité ne satisfaisant pas les exigences.

12. Procédé de disposition de documents de sécurité, lors duquel un dispositif (10) selon une des revendications 1 à 8 ou un système de stockage de documents de sécurité selon une des revendications 9 à 11 est mis à disposition et des documents de sécurité reçus dans au moins un contenant (22) sont déplacés au moyen de l'installation de mouvement (30) dans le but de positionner le contenant (22) sur un emplacement de stockage (20) et/ou de prélever le contenant (22) d'un emplacement de stockage (20).
